# EUROPÄISCHE PATENTSCHRIFT

(11) **EP 3 365 739 B1**
(45) Veröffentlichungstag und Bekanntmachung des Hinweises auf die Patenterteilung: **03.06.2020**
(21) Anmeldenummer: 17711608.4
(22) Anmeldetag: 14.03.2017
(51) Int. Cl.: G05D 1/02, G08G 1/14, G07B 15/02, B60W 30/06, G08G 1/16, B62D 15/02

(54) **VERFAHREN ZUM STEUERN EINES ZUMINDEST TEILAUTONOM BETRIEBENEN KRAFTFAHRZEUGS UND KRAFTFAHRZEUG**
METHOD FOR DRIVING A MOTOR VEHICLE AT LEAST PARTIALLY AUTONOMOUSLY AND MOTOR VEHICLE
PROCÉDÉ DE PILOTAGE D'UN VÉHICULE AUTOMOBILE AU MOINS SEMI-AUTONOME ET VÉHICULE AUTOMOBILE

(30) Priorität: 16.03.2016 DE 102016003231
(43) Veröffentlichungstag der Anmeldung: 29.08.2018
(73) Patentinhaber: Audi AG, 85045 Ingolstadt (DE)
(72) Erfinder: REICH, Andreas, 85114 Buxheim (DE)
(86) Internationale Anmeldenummer: PCT/EP2017/055950
(87) Internationale Veröffentlichungsnummer: WO 2017/157913

(56) Entgegenhaltungen:
- WO-A1-2016/083037
- DE-A1-102012 223 057
- DE-A1-102013 222 071
- DE-A1-102014 211 557
- DE-A1-102014 224 075
- US-A1- 2012 245 981

## Beschreibung

Die Erfindung betrifft ein Verfahren zum Steuern eines zumindest teilautonom betriebenen Kraftfahrzeugs, wobei das Kraftfahrzeug und/oder seine Umgebung durch wenigstens eine Sensoreinrichtung erfasst wird und die Bewegung des Kraftfahrzeugs steuernde Bewegungsinformationen von einer kraftfahrzeugexternen Recheneinrichtung ermittelt und an das Kraftfahrzeug übertragen werden, wobei die Bewegungsinformationen in Abhängigkeit wenigstens einer das Manövriervermögen des Kraftfahrzeugs und/oder das Detektionsvermögen der Sensoreinrichtung betreffenden Information ermittelt werden.

Bei solchen Verfahren für teilweise oder vollständig autonom betriebene Kraftfahrzeuge ist eine kraftfahrzeugexterne Recheneinrichtung vorgesehen, die Bewegungsinformationen ermittelt und diese an das Kraftfahrzeug überträgt. Die Bewegungsinformationen steuern das Kraftfahrzeug beispielsweise durch die Vorgabe einer Trajektorie, entlang welcher das Kraftfahrzeug fahren soll. Typischerweise werden solche Verfahren zum Steuern des Kraftfahrzeugs in einem Parkhaus verwendet, wobei die Recheneinrichtung die Bewegungsinformationen unter Berücksichtigung von Sensordaten einer ebenfalls kraftfahrzeugextern angeordneten Sensoreinrichtung ermittelt.

Die DE 10 2014 209 496 A1 offenbart ein Verfahren zur Fahrerassistenz auf einem Großparkplatz, wobei ein Fahrzeug mittels Fahrmanöverinformationen auf dem Großparkplatz geleitet wird, wobei der Großparkplatz mehrere räumlich verteilte Informationsquellen aufweist, welche die Fahrmanöverinformationen bereitstellen, wobei die Fahrmanöverinformationen Parameter von Fahrtrajektorien umfassen und ein Fahrassistenzsystem des Fahrzeugs anhand der Parameter einer Fahrtrajektorie ein der Fahrtrajektorie entsprechendes Fahrmanöver durchführt.

Aus der DE 10 2012 222 562 A1 ist ein System für bewirtschaftete Parkflächen zur Überführung eines Fahrzeugs von einer Startposition in eine Zielposition bekannt, umfassend eine ortsfest angeordnete zentrale Recheneinheit zur Berechnung einer Bewegungsbahn, entlang der sich das Fahrzeug mit einer Fahrzeuggeschwindigkeit autonom von der Startposition in die Zielposition bewegt, und eine Übertragungseinrichtung zur Übertragung der Bewegungsbahn an das Fahrzeug. Die zentrale Recheneinheit ist dazu ausgebildet, Geschwindigkeitssteuersignale zu generieren und an die Übertragungseinrichtung zur Übertragung an das Fahrzeug zu übergeben, so dass sich das Fahrzeug mit unterschiedlichen, von null verschiedenen Fahrzeuggeschwindigkeiten, gesteuert durch die Geschwindigkeitssteuersignale entlang der Bewegungsbahn bewegen kann.

Ein Valet Parking-Verfahren zum automatischen Verbringen eines Fahrzeugs zu einem Parkplatz ist aus der Druckschrift DE 10 2014 211 557 A1 bekannt. Eine zentrale Steuereinheit weist einem Fahrzeug einen freien Parkplatz zu und übermittelt Informationen, die es dem Fahrzeug erlauben, den zugewiesenen Parkplatz autonom anzufahren. Die Zuweisung des freien Parkplatzes kann in Abhängigkeit der geometrischen Abmessungen, insbesondere der Höhe, des Fahrzeugs erfolgen. Die Druckschrift DE 10 2014 211 557 A1 ist als nächstliegender Stand der Technik nach dem Oberbegriff des Anspruchs 1 zu sehen.

Die nachveröffentlichte Druckschrift WO 2016/083037 A1 betrifft ein Verfahren zum assistierten Führen eines Fahrzeugs, wobei eine auf einem Parkplatz abzufahrende Solltrajektorie für das Fahrzeug abhängig von einem Fahrzeugtyp des Fahrzeugs ermittelt wird.

Die Qualität der im Rahmen herkömmlicher Verfahren ermittelten Bewegungsinformationen lässt jedoch zu wünschen übrig, da sie insbesondere nicht an individuelle Eigenschaften des gesteuerten Kraftfahrzeugs oder einer Sensoreinrichtung angepasst sind. Beispielsweise kann durch eine vorgegebene Trajektorie bei ihrem Abfahren durch ein Kraftfahrzeug nicht sichergestellt werden, dass jeder Kraftfahrzeugtyp sie nachverfolgen kann oder unerwartet auftretenden Hindernissen rechtzeitig ausgewichen werden kann.

Der Erfindung liegt mithin die Aufgabe zugrunde, bei der Steuerung eines zumindest teilautonom betriebenen Kraftfahrzeugs verbesserte Bewegungsinformationen bereitzustellen.

Bei einem Verfahren der eingangs genannten Art wird diese Aufgabe erfindungsgemäß dadurch gelöst, dass eine das Manövriervermögen des Kraftfahrzeugs betreffende Information verwendet wird, welche einen Sicherheitsabstand zu Objekten in der Umgebung des Kraftfahrzeugs beschreibt, und/oder dass eine das Detektionsvermögen der Sensoreinrichtung betreffende Information verwendet wird, welche einen Sicherheitsabstand zu Objekten in der Umgebung des Kraftfahrzeugs und/oder eine von der Sensoreinrichtung angewendete Sensortechnologie und/oder die räumliche Anordnung oder die kraftfahrzeugseitige Position wenigstens eines Sensors der Sensoreinrichtung beschreibt.

Die Erfindung beruht auf der Erkenntnis, dass sich die Steuerung des Kraftfahrzeugs durch Bewegungsinformationen erheblich verbessern lässt, wenn bei deren Ermittlung zusätzlich das Manövriervermögen des Kraftfahrzeugs und/oder das Detektionsvermögen der Sensoreinrichtung berücksichtigt wird. Dabei kann das Kraftfahrzeug und/oder seine Umgebung durch wenigstens eine kraftfahrzeugexterne Sensoreinrichtung erfasst und/oder die Umgebung des Kraftfahrzeugs durch eine im Kraftfahrzeug verbaute Sensoreinrichtung erfasst werden.

Die kraftfahrzeugexterne Recheneinrichtung kann zunächst Sensordaten der wenigstens einen Sensoreinrichtung, welche die Position des Kraftfahrzeugs und/oder die Position von Hindernissen in der Umgebung des Kraftfahrzeugs beschreiben, und eine vorgegebene oder vorgebbare Zielposition für das Kraftfahrzeug auswerten und erfindungsgemäß die Bewegungsinformationen in Abhängigkeit der wenigstens einen Information, die insbesondere das Manövriervermögen des Kraftfahrzeugs und/oder das Detektionsvermögen wenigstens einer Sensoreinrichtung beschreibt, ermitteln. Die wenigstens eine Information kann auch als Eigenschaftsinformation aufgefasst bzw. bezeichnet werden. Zweckmäßigerweise ermittelt die Recheneinrichtung die Bewegungsinformationen derart, dass das Kraftfahrzeug kollisionsfrei bzw. eine Kollision mit Objekten in seiner Umgebung vermeidend gesteuert wird.

Erfindungsgemäß werden die ermittelten Bewegungsinformationen an das Kraftfahrzeug übertragen, wozu bevorzugt jeweils eine kraftfahrzeugseitige und recheneinrichtungsseitige Kommunikationseinrichtung verwendet werden. Das Kraftfahrzeug weist zweckmäßigerweise eine Steuereinrichtung auf, welche eine Lenkeinrichtung und/oder eine Bremseinrichtung und/oder einer Antriebseinrichtung des Kraftfahrzeugs in Abhängigkeit der empfangenen Bewegungsinformationen ansteuert. Welche der vorgenannten Einrichtungen angesteuert werden, hängt insbesondere vom Grad der Automatisierung des Kraftfahrzeugs ab, welches im Rahmen des erfindungsgemäßen Verfahrens teilautonom oder vollständig autonom betrieben werden kann.

Durch das erfindungsgemäße Verfahren wird mithin eine Information zum Manövriervermögen, welches bei verschiedenen Typen von Kraftfahrzeugen unterschiedlich ausgeprägt ist, bei der Ermittlung der Bewegungsinformationen berücksichtigt. Daneben kann das Manövriervermögen auch durch Umwelteinflüsse wie die Umgebungstemperatur nicht nur zwischen Kraftfahrzeugen verschiedenen Typs, sondern auch zwischen Kraftfahrzeugen des gleichen Typs variieren. Die Bewegungsinformationen können durch die Berücksichtigung dieser Aspekte individuell für das konkrete Kraftfahrzeug ermittelt werden. Alternativ oder zusätzlich wird bei dem erfindungsgemäßen Verfahren das Detektionsvermögen der wenigstens ein Sensoreinrichtung berücksichtigt, wodurch insbesondere bei einer kraftfahrzeugseitigen Sensoreinrichtung, Unterschiede im Detektionsverhalten zwischen verschiedenen Typen von Umgebungssensoren einer Sensoreinrichtung berücksichtigt werden können. Dies ist insbesondere zweckmäßig, wenn das Kraftfahrzeug in Abhängigkeit von kraftfahrzeugseitig gewonnenen Sensordaten selbst in den Fahrverlauf eingreift und die Überwachung durch eine kraftfahrzeugexterne Sensoreinrichtung mithin nur redundant erfolgt.

Bei der Verwendung einer das Manövriervermögen des Kraftfahrzeugs betreffenden Information im Rahmen des erfindungsgemäßen Verfahrens ist es vorteilhaft, wenn sie die Leistungsfähigkeit einer Lenkeinrichtung und/oder einer Bremseinrichtung und/oder einer Antriebseinrichtung des Kraftfahrzeugs beschreibt. Die Leistungsfähigkeit kann sich insbesondere aus dem physikalischen Zustand einer solchen Einrichtung ergeben, der beispielsweise von ihrer Temperatur oder ihrem Verschleißzustand abhängt. Hinsichtlich der Lenkeinrichtung kann die Information beispielsweise einen maximal möglichen Lenkeinschlag und/oder ein Lenkspiel beschreiben. Die die Leistungsfähigkeit der Bremseinrichtung beschreibende Information kann beispielsweise Daten über den Bremsweg beinhalten, da ein Kraftfahrzeug mit einer kalten oder verschlissenen Bremseinrichtung langsamer verzögert. Hinsichtlich der Antriebseinrichtung kann die Information eine maximal mögliche Beschleunigung beschreiben.

In einer besonders bevorzugten Ausgestaltung des erfindungsgemäßen Verfahrens wird eine das Manövriervermögen des Kraftfahrzeugs betreffende Information verwendet, welche einen Sicherheitsabstand zu Objekten in der Umgebung des Kraftfahrzeugs beschreibt. Mithin können die Bewegungsinformationen derart ermittelt werden, dass beim Steuern des Kraftfahrzeugs durch die Bewegungsinformationen stets ein vom Manövriervermögen des Kraftfahrzeugs abhängiger Sicherheitsabstand eingehalten wird, um eine Kollision mit den Objekten während der Fahrt des Kraftfahrzeugs zu vermeiden. Beispielsweise kann der Sicherheitsabstand derart gewählt sein, dass das Kraftfahrzeug jederzeit rechtzeitig bremsen oder ausweichen kann. Der Sicherheitsabstand wird insbesondere in Abhängigkeit der zuvor beschriebenen Leistungsfähigkeit der Lenkeinrichtung und/oder der Bremseinrichtung und/oder der Antriebseinrichtung des Kraftfahrzeugs ermittelt.

Alternativ oder zusätzlich kann im Rahmen des erfindungsgemäßen Verfahrens eine das Detektionsvermögen der Sensoreinrichtung betreffende Information verwendet werden, welche eine von der Sensoreinrichtung angewendete Sensortechnologie und/oder Latenzzeiten bei der Auswertung von Sensordaten wenigstens eines Sensors der Sensoreinrichtung und/oder die räumliche Anordnung oder die kraftfahrzeugseitige Position wenigstens eines Sensors der Sensoreinrichtung und/oder den Erfassungsbereich wenigstens eines Sensors der Sensoreinrichtung beschreibt. Hinsichtlich der angewendeten Sensortechnologie kann die Information beispielsweise beschreiben, dass eine kraftfahrzeugexterne Sensoreinrichtung eine Kamera als Sensor aufweist oder dass eine im Kraftfahrzeug verbaute Sensoreinrichtung eine Kamera und/oder einen Radarsensor und/oder einen Ultraschallsensor umfasst. Alternativ oder zusätzlich kann die Information die räumliche Anordnung wenigstens eines Sensors einer kraftfahrzeugexternen Sensoreinrichtung oder die kraftfahrzeugseitige, also auf einen Kraftfahrzeug-Koordinatensystem bezogene, Position wenigstens eines Sensors einer im kraftfahrzeugverbauten Sensoreinrichtung beschreiben. Besonders zweckmäßig ist es, wenn eine Information verwendet wird, die Latenzzeiten bei der Auswertung von Sensordaten wenigstens eines Sensors der Sensoreinrichtung beschreibt. Diese sind bei der Ermittlung der Bewegungsinformationen von besonderem Interesse, da sie angeben, welche Latenzzeit verstreicht, bis ein in einen Erfassungsbereich eines Sensors eintretendes Objekt erfasst und beispielsweise durch eine Auswertungseinheit der Sensoreinrichtung erkannt wird. Das Auftreten solcher Latenzzeiten resultiert insbesondere aus Rechenzeiten, die während der Plausibilisierung von Sensordaten des Sensors durch eine Auswertungseinheit der Sensoreinrichtung verstreichen.

Auch bei der Verwendung einer das Detektionsvermögen der Sensoreinrichtung betreffenden Information im Rahmen des erfindungsgemäßen Verfahrens wird es besonders bevorzugt, wenn die Information einen Sicherheitsabstand zu Objekten in der Umgebung des Kraftfahrzeugs beschreibt. Eine solche Information beschreibt mithin welcher Abstand um das Fahrzeug herum einzuhalten ist, damit die Objekte rechtzeitig vor einer Kollision erkannt werden können. Der Sicherheitsabstand kann beispielsweise aus den zuvor erwähnten Latenzzeiten unter Berücksichtigung einer Geschwindigkeit des Kraftfahrzeugs ermittelt werden. Besonders bevorzugt wird der Sicherheitsabstand, der das Detektionsvermögen betrifft, mit dem das Manövriervermögen des Kraftfahrzeugs beschreibenden Sicherheitsabstand fusioniert, beispielsweise indem ein Maximalwert beider Sicherheitsabstände verwendet wird.

Bei der Durchführung des erfindungsgemäßen Verfahrens kann wenigstens eine Information vom Kraftfahrzeug an die Recheneinrichtung übertragen werden. Dies ist besonders bei einer das Detektionsvermögen einer kraftfahrzeugseitige verbauten Sensoreinrichtung betreffenden Information und/oder einer das Manövriervermögen des Kraftverzugs betreffenden Information zweckmäßig. Es ist aber auch möglich, dass die Recheneinrichtung wenigstens eine Information ermittelt und/oder aus einem recheneinrichtungsseitigen Speicher abruft. Dies wird besonders bei einer das Detektionsvermögen einer kraftfahrzeugexternen Sensoreinrichtung betreffenden Information bevorzugt. Darüber hinaus ist es auch denkbar, dass die Recheneinrichtung lediglich einen Typ des Kraftfahrzeugs, beispielsweise ein bestimmtes Modell eines Herstellers, beschreibende Typdaten vom Kraftfahrzeug erhält oder Typdaten durch Auswerten von Sensordaten einer kraftfahrzeugexternen Sensoreinrichtung ermittelt. Anhand der Typdaten kann das Manövriervermögen des Kraftfahrzeugs und/oder das Detektionsvermögen wenigstens einer im Kraftfahrzeug verbauten Sensoreinrichtung ermittelt, beispielsweise durch Abrufen aus einer recheneinrichtungsexternen Datenbank, und/oder aus dem Speicher geladen werden.

Wie bereits zuvor beschrieben kann im Rahmen des erfindungsgemäßen Verfahrens eine kraftfahrzeugexterne Sensoreinrichtung verwendet werden. Dabei wird bevorzugt eine wenigstens eine Kamera aufweisende Sensoreinrichtung verwendet, die der Recheneinrichtung Sensordaten über das Kraftfahrzeug, insbesondere über seine Bewegung innerhalb eines Erfassungsbereichs der Kamera, und/oder seine Umgebung bereitstellt. Typischerweise werden derartige Sensordaten zur Positionsermittlung durch die Recheneinrichtung ausgewertet, wobei die Genauigkeit einer so ermittelten Position vom Detektionsvermögen der kraftfahrzeugexternen Sensoreinrichtung abhängt. Durch die Berücksichtigung der dieses Detektionsvermögen beschreibenden Information kann die Recheneinrichtung bei der Ermittlung der Bewegungsinformation mithin notwendige Abstände des Kraftfahrzeugs zu Objekten in seiner Umgebung berücksichtigen, wodurch vermieden wird, dass die kraftfahrzeugexterne Sensoreinrichtung eine drohende Kollision aufgrund ihres eingeschränkten Detektionsvermögen nicht erkennen kann.

Wie ebenfalls bereits ausgeführt wurde, kann beim erfindungsgemäßen Verfahren eine im Kraftfahrzeug verbaute Sensoreinrichtung verwendet werden. Dabei wird es besonders bevorzugt, wenn das Kraftfahrzeug bei einer aufgrund von Sensordaten der in ihm verbauten Sensoreinrichtung ermittelten drohenden Kollision mit einem Objekt in seiner Umgebung selbständig anhält oder dem Objekt ausweicht. Das heißt, dass das Kraftfahrzeug durch die Bewegungsinformationen von der Recheneinrichtung gesteuert wird und zusätzlich seine Umgebung mit der im Kraftfahrzeug verbauten Sensoreinrichtung überwacht, um eine Kollision mit einem Objekt in seiner Umgebung zu vermeiden. Selbstverständlich können bereits die Bewegungsinformationen recheneinrichtungsseitig derart ermittelt sein, dass Kollisionen vermieden werden, wobei durch die zusätzliche Überwachung der Umgebung durch das Kraftfahrzeug ein darüber hinaus verbesserter Kollisionsschutz ermöglicht wird. Dies gilt insbesondere wenn sich unerwartet eine Person dem Kraftfahrzeug nähert und dies von der Recheneinrichtung nicht berücksichtigt werden konnte. Durch die zusätzliche Berücksichtigung des Detektionsvermögens und/oder des Manövriervermögens des Kraftfahrzeugs wird sichergestellt, dass das Kraftfahrzeug anhalten oder vor einem solchen, für die Recheneinrichtung unerwartet auftretenden Objekt ausweichen kann.

Es ist im Rahmen des erfindungsgemäßen Verfahrens zweckmäßig, wenn die Bewegungsinformationen eine Trajektorie umfassen. Die Recheneinrichtung gibt also einen Bewegungspfad und gegebenenfalls auch eine Geschwindigkeit entlang des Bewegungspfads vor, entlang dem sich das Kraftfahrzeug bewegen soll. Es ist aber auch möglich, dass die Bewegungsinformationen ein Anhaltesignal und/oder ein Freigabesignal für zumindest einen Streckenabschnitt umfassen. Durch die Recheneinrichtung kann das Kraftfahrzeug mithin veranlasst werden, sofort anzuhalten bzw. sich aufgrund des Freigabesignals in Bewegung zu setzen, wobei sich die Freigabe lediglich auf einen Streckenabschnitt beziehen oder bis zum Erreichen einer Zielposition erteilt werden kann.

Das erfindungsgemäßen Verfahren wird bevorzugt in einer so genannten intelligenten Zone durchgeführt. Darunter sind Umgebungen zu verstehen, denen die Recheneinrichtung zugeordnet ist, um das Kraftfahrzeug in einem begrenzten Gebiet zu steuern. Insbesondere können kraftfahrzeugexterne Sensoreinrichtungen dieses Gebiet zumindest teilweise überwachen und ihre Sensordaten der Recheneinrichtung bereitstellen. Besonders bevorzugt wird das erfindungsgemäße Verfahren zum Steuern des Kraftfahrzeugs innerhalb einer Anlage für das Parken von Kraftfahrzeugen durchgeführt. Eine solche Anlage kann ein Parkhaus mit einer oder mehreren Ebenen oder ein Parkplatz, insbesondere mit Stellplätzen für eine Vielzahl von Kraftfahrzeugen, sein.

Daneben betrifft die Erfindung ein Kraftfahrzeug, welches zumindest teilautonom betreibbar und gemäß dem erfindungsgemäßen Verfahren steuerbar ist. Sämtliche Ausführungen zum erfindungsgemäßen Verfahren lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines erfindungsgemäßen Kraftfahrzeugs und
- Fig. 2: eine Draufsicht auf eine beispielhafte Anlage für das Parken von Fahrzeugen, wobei sich das in Fig. 1 gezeigte Kraftfahrzeug in der Anlage bewegt.

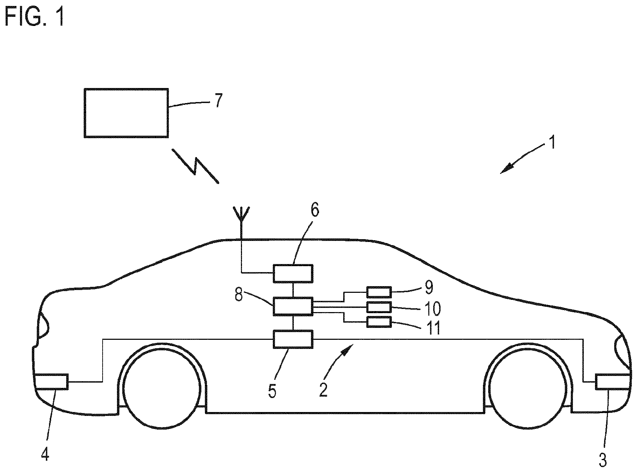

Fig. 1 zeigt eine Prinzipskizze eines Kraftfahrzeugs 1, umfassend eine Sensoreinrichtung 2, welche einen frontseitig verbauten Sensor 3, einen heckseitig verbauten Sensor 4 und eine Auswertungseinheit 5 aufweist, und eine Kommunikationseinrichtung 6 zur Kommunikation mit einer lediglich schematisch dargestellten kraftfahrzeugexternen Recheneinrichtung 7. Es ist ferner eine Steuereinrichtung 8 vorgesehen, mittels welcher eine Lenkeinrichtung 9, eine Bremseinrichtung 10 und eine Antriebseinrichtung 11 des Kraftfahrzeugs 1 ansteuerbar sind.

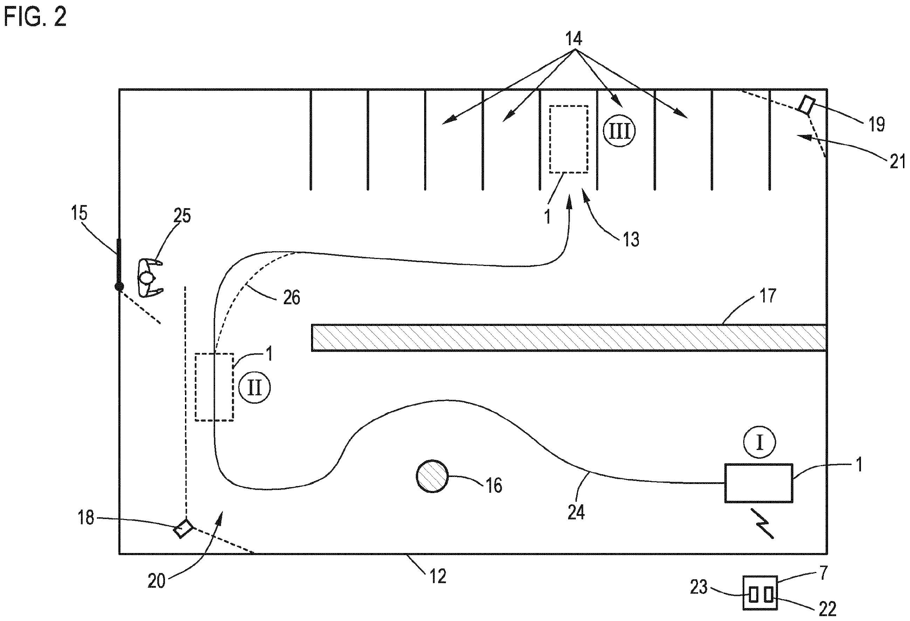

Fig. 2 zeigt eine Draufsicht auf eine beispielhafte Anlage 12 für das Parken von Fahrzeugen, wobei sich das Kraftfahrzeug 1 in der Anlage 12 bewegt. Die Anlage 12 weist einen Stellplatz 13, zu dem das Kraftfahrzeug 1 von einer Position I aus bewegt werden soll, sowie weitere Stellplätze 14 auf. Die Anlage 12 ist über eine Tür 15 zugänglich und weist mehrere Hindernisse 16, 17 auf. Innerhalb der Anlage 12 sind zwei kraftfahrzeugexterne Sensoreinrichtungen 18, 19 mit jeweiligen Erfassungsbereichen 20, 21 angeordnet, welche der Recheneinrichtung 7 Sensordaten bereitstellen. Ein Verfahren zum autonomen oder teilautonomen Steuern eines Kraftfahrzeugs, demgemäß das Kraftfahrzeug 1 steuerbar ist, wird im Folgenden näher erläutert:
Zu Beginn des Verfahrens befindet sich das Kraftfahrzeug 1 an einer Position I in einem Einfahrtsbereich der Anlage 12. Die Steuereinrichtung 8 ermittelt eine einen Sicherheitsabstand zu Objekten in der Umgebung des Kraftfahrzeugs 1 beschreibende erste Information, welche das Manövriervermögen des Kraftfahrzeugs 1 und das Detektionsvermögen der Sensoreinrichtung 2 betrifft. Hinsichtlich des Manövriervermögens wertet die Steuereinrichtung 8 dazu die Leistungsfähigkeit der Lenkeinrichtung 9, der Bremseinrichtung 10 und der Antriebseinrichtung 11 aus, wobei z. B. der maximal mögliche Lenkeinschlag, das Lenkspiel, der momentane Bremsweg in Abhängigkeit der Temperatur der Bremseinrichtung 10 und ihres Verschleißgrades und/oder eine maximal mögliche Beschleunigung des Kraftfahrzeugs 1 durch die Antriebseinrichtung 11 berücksichtigt werden. Hinsichtlich des Detektionsvermögen berücksichtigt die Steuereinrichtung 8 z. B. die Sensortechnologie der Sensoren 3, 4, Latenzzeiten bei der Auswertung von Sensordaten der Sensoren 3, 4 durch die Auswertungseinheit 5, die kraftfahrzeugseitige Position der Sensoren 3, 4 und/oder deren Erfassungsbereiche. Es ergibt sich so ein Sicherheitsabstand um das Kraftfahrzeug 1, der eingehalten werden muss, um eine Kollision mit Objekten in der Umgebung des Kraftfahrzeugs 1 zu vermeiden, indem die Sensoreinrichtung 2 ein solches Objekt erfasst und die Steuereinrichtung 8 die Lenkeinrichtung 9, die Bremseinrichtung 10 und die Antriebseinrichtung 11 zum Ausweichen des Kraftfahrzeugs 1 ansteuert. Diese erste Information überträgt die Steuereinrichtung 8 über die Kommunikationseinrichtung 6 an eine Kommunikationseinrichtung 22 der Recheneinrichtung 7.

Die Recheneinrichtung 7 lädt zudem eine zweite Information über das Detektionsvermögen der Sensoreinrichtungen 18, 19 aus einem Speicher 23. Die zweite Information beschreibt dabei die von den Sensoreinrichtung 18, 19 angewendete Sensortechnologie, vorliegend jeweils eine Bilderfassung durch Kameras, Latenzzeiten bei der Auswertung von Sensordaten dieser Kameras, die räumliche Anordnung der Kameras in der Anlage 12 und die Erfassungsbereiche 20, 21.

Die Recheneinrichtung 7 ermittelt Bewegungsinformationen in Form einer Trajektorie 24 in Abhängigkeit der ersten Information und der zweiten Information derart, dass eine Kollision mit den Hindernissen 16, 17 vermieden wird und das Kraftfahrzeug den Stellplatz 13 erreicht. Zum einen wird dabei berücksichtigt, welche Lenkradien die Lenkeinrichtung 9 des Kraftfahrzeugs 1 umsetzen kann. Zum anderen wird die Trajektorie 24 so ermittelt, dass der Sicherheitsabstand, welcher durch die erste Information beschrieben wird, stets eingehalten wird, um rechtzeitig auf unerwartete Objekte reagieren zu können. Ebenso fließt die zweite Information in die Ermittlung der Trajektorie 24 derart ein, dass das Kraftfahrzeug 1 rechtzeitig angehalten werden kann, wenn während der Fahrt durch die Sensoreinrichtungen 2, 18, 19 ein unerwartetes Hindernis detektiert wird, wobei Ungenauigkeiten bei der Positionserfassung durch die Sensoreinrichtung 18, 19 berücksichtigt werden.

Im Anschluss werden die Trajektorie 24 und ein Freigabesignal für das Abfahren der Trajektorie 24 über die Kommunikationseinrichtung 22 an das Kraftfahrzeug 1 übertragen, wonach die Steuereinrichtung 8 die Lenkeinrichtung 9, die Bremseinrichtung 10 und die Antriebseinrichtung 11 zum vollständig autonomen Abfahren der Trajektorie 24 ansteuert. In Ausführungsbeispielen, in denen ein teilautonom betriebenes Kraftfahrzeug 1 verwendet wird, wird lediglich die Lenkeinrichtung 9 bzw. werden nur die Bremseinrichtung 10 und die Antriebseinrichtung 11 angesteuert.

Währenddessen erreicht das Kraftfahrzeug 1 eine Position II. Es hat sich unerwartet die Tür 15 geöffnet, wobei eine Person 25 als Objekt, mit der eine Kollision zu vermeiden ist, die Anlage 12 betritt und sich in Richtung der Trajektorie 24 bewegt. Die Person 25 gelangt dabei in den Erfassungsbereich des Sensors 3 der kraftfahrzeugseitigen Sensoreinrichtung 2, wobei eine gewisse Latenzzeit verstreicht bis die Auswertungseinheit 5 die Person 25 durch Plausibilisierung der Sensordaten erkannt hat. Die Steuereinrichtung 8 erhält diese Sensordaten und steuert die Lenkeinrichtung 9 zum Verlassen der übermittelten Trajektorie 24 an, so dass ein alternativer Bewegungsweg 26 eingeschlagen wird, der nach einem Ausweichen vor der Person 25 wieder auf die Trajektorie 24 führt. Dadurch, dass die Trajektorie 24 durch die Recheneinrichtung 7 unter Berücksichtigung des Detektionsvermögens der Sensoreinrichtung 2, insbesondere der Latenzzeiten, und des Manövriervermögens des Kraftfahrzeugs 1, insbesondere des maximal möglichen Lenkeinschlags, ermittelt wurde, ist ein erfolgreiches Ausweichen vor der Person 25 möglich.

Im Anschluss fährt das Kraftfahrzeug 1 die Trajektorie 24 weiter ab, bis es an der Position III den Stellplatz 13 erreicht hat.

Die folgenden Ausführungsbeispiele sind Abwandlungen einzelner Aspekte des zuvor beschriebenen Verfahrens und ebenfalls erfindungsgemäß.

Gemäß einem alternativen Ausführungsbeispiel des Verfahrens wird nicht vor der Person 25 ausgewichen, sondern die Bremseinrichtung 10 durch die kraftfahrzeugseitige Steuereinrichtung 8 zum Anhalten des Kraftfahrzeugs 1 angesteuert, wobei die Trajektorie 24 so ermittelt wurde, dass das Kraftfahrzeug 1 rechtzeitig vor einer Kollision mit der Person 25 zum Stehen kommt. Das Kraftfahrzeug 1 hält also selbständig an.

Gemäß einem weiteren Ausführungsbeispiel des Verfahrens erfasst die kraftfahrzeugexterne Sensoreinrichtung 19 an der Position II die Person 25, wobei wiederum Latenzzeiten auftreten. Die kraftfahrzeugexterne Recheneinrichtung 7 ermittelt daraufhin eine dem Bewegungsweg 26 entsprechende Ausweichtrajektorie umfassende Bewegungsinformationen und übermittelt sie an das Kraftfahrzeug 1, wonach die kraftfahrzeugseitige Steuereinrichtung 8 die Lenkeinrichtung 9 zum Abfahren der Ausweichtrajektorie ansteuert. Die Ausweichbewegung des Kraftfahrzeugs 1 wird mithin extern ermittelt und nicht durch das Kraftfahrzeugs 1 selbst.

Gemäß einem weiteren Ausführungsbeispiel wird an der Position II nicht vor der Person 25 ausgewichen, sondern es werden Bewegungsinformationen in Form eines Anhaltesignals von der kraftfahrzeugexternen Recheneinrichtung 7 an das Kraftfahrzeug 1 übertragen, wobei die kraftfahrzeugseitige Steuereinrichtung 8 die Bremseinrichtung 10 zum Anhalten des Kraftfahrzeugs 1 ansteuert. Sobald mittels der Sensoreinrichtung 19 erfasst wird, dass die Person 25 soweit vom Kraftfahrzeug 1 und der Trajektorie 24 entfernt ist, dass keine Kollisionsgefahr mehr besteht, übermittelt die Recheneinrichtung 7 Bewegungsinformationen in Form eines Freigabesignals für das Abfahren des restlichen Streckenabschnitts der Trajektorie 24 bis zur Position III. Das Anhalten und die Freigabe werden mithin kraftfahrzeugextern vorgegeben.

Gemäß einem weiteren Ausführungsbeispiel übermittelt das Kraftfahrzeug 1 eine die Leistungsfähigkeit der Lenkeinrichtung 9, der Bremseinrichtung 10 und der Antriebseinrichtung 11 sowie die Sensortechnologie der Sensoren 3, 4, die Latenzzeiten bei der Auswertung von Sensordaten der Sensoren 3, 4 durch die Auswertungseinheit 5 und die kraftfahrzeugseitige Position der Sensoren 3, 4 und deren Erfassungsbereiche beschreibende erste Information an die Recheneinrichtung 9, welche den Schutzabstand zur Ermittlung der Trajektorie 24 selbst berechnet.

Gemäß einem weiteren Ausführungsbeispiel wird das Kraftfahrzeug 1 an der Position I durch die Sensoreinrichtung 18 erfasst und hinsichtlich seines Fahrzeugtyps durch die Recheneinrichtung 7 identifiziert. Die das Manövriervermögen des Kraftfahrzeugs 1 und das Detektionsvermögen der Sensoreinrichtung 2 beschreibende erste Information wird anschließend durch die Recheneinrichtung 7 von einem recheneinrichtungsexternen Server abgerufen oder aus einer im Speicher 23 gespeicherten Datenbank geladen.

## Patentansprüche

1. Verfahren zum Steuern eines zumindest teilautonom betriebenen Kraftfahrzeugs (1), wobei das Kraftfahrzeug (1) und/oder seine Umgebung durch wenigstens eine Sensoreinrichtung (2, 18, 19) erfasst wird und die Bewegung des Kraftfahrzeugs (1) steuernde Bewegungsinformationen von einer kraftfahrzeugexternen Recheneinrichtung (7) ermittelt und an das Kraftfahrzeug (1) übertragen werden, wobei die Bewegungsinformationen in Abhängigkeit wenigstens einer das Manövriervermögen des Kraftfahrzeugs (1) und/oder das Detektionsvermögen der Sensoreinrichtung (2, 18, 19) betreffenden Information ermittelt werden,
**dadurch gekennzeichnet,**
**dass** eine das Manövriervermögen des Kraftfahrzeugs (1) betreffende Information verwendet wird, welche einen Sicherheitsabstand zu Objekten in der Umgebung des Kraftfahrzeugs (1) beschreibt, und/oder dass eine das Detektionsvermögen der Sensoreinrichtung (2, 18, 19) betreffende Information verwendet wird, welche einen Sicherheitsabstand zu Objekten in der Umgebung des Kraftfahrzeugs (1) und/oder eine von der Sensoreinrichtung (2, 18, 19) angewendete Sensortechnologie und/oder die räumliche Anordnung oder die kraftfahrzeugseitige Position wenigstens eines Sensors (3, 4) der Sensoreinrichtung (2, 18, 19) beschreibt.

2. Verfahren nach Anspruch 1,
**dadurch gekennzeichnet,**
**dass** eine das Manövriervermögen des Kraftfahrzeugs (1) betreffende Information verwendet wird, welche die Leistungsfähigkeit einer Lenkeinrichtung (9) und/oder einer Bremseinrichtung (10) und/oder einer Antriebseinrichtung (11) des Kraftfahrzeugs (1) beschreibt, und/oder dass eine das Detektionsvermögen der Sensoreinrichtung (2, 18, 19) betreffende Information verwendet wird, welche Latenzzeiten bei der Auswertung von Sensordaten wenigstens eines Sensors (3, 4) der Sensoreinrichtung (2, 18, 19) beschreibt.

3. Verfahren nach Anspruch 1 oder 2,
**dadurch gekennzeichnet,**
**dass** wenigstens eine Information vom Kraftfahrzeug (1) an die Recheneinrichtung (7) übertragen wird.

4. Verfahren nach einem der vorangehenden Ansprüche,
**dadurch gekennzeichnet,**
**dass** die Recheneinrichtung (7) wenigstens eine Information ermittelt und/oder aus einem recheneinrichtungsseitigen Speicher (23) abruft.

5. Verfahren nach einem der vorhergehenden Ansprüche,
**dadurch gekennzeichnet,**
**dass** eine kraftfahrzeugexterne Sensoreinrichtung (18, 19) und/oder eine im Kraftfahrzeug (1) verbaute Sensoreinrichtung (2) verwendet wird oder werden.

6. Verfahren nach Anspruch 5,
**dadurch gekennzeichnet,**
**dass** das Kraftfahrzeug (1) bei einer aufgrund von Sensordaten der in ihm verbauten Sensoreinrichtung (2) ermittelten drohenden Kollision mit einem Objekt (25) in seiner Umgebung selbständig anhält oder dem Objekt (25) ausweicht.

7. Verfahren nach einem der vorangehenden Ansprüche,
**dadurch gekennzeichnet,**
**dass** die Bewegungsinformationen eine Trajektorie (24) und/oder ein Anhaltesignal und/oder ein Freigabesignal für zumindest einen Streckenabschnitt umfassen.

8. Verfahren nach einem der vorhergehenden Ansprüche,
**dadurch gekennzeichnet,**
**dass** es zum Steuern des Kraftfahrzeugs (1) innerhalb Anlage (12) für das Parken von Fahrzeugen durchgeführt wird.

9. Kraftfahrzeug, welches zumindest teilautonom betreibbar und gemäß einem Verfahren nach einem der vorangehenden Ansprüche steuerbar ist.

## Claims

1. Method for driving a motor vehicle (1) at least partially autonomously, wherein the motor vehicle (1) and/or the surroundings thereof are detected by at least one sensor device (2, 18, 19) and the movement information controlling the movement of the motor vehicle (1) is determined by a calculation device (7) which is on the outside of the motor vehicle and transmits to the motor vehicle (1), wherein the movement information is determined in accordance with at least one item of information relating to the manoeuvring capacity of the motor vehicle (1) and/or the detection capability of the sensor device (2, 18, 19),
**characterised in that**
information relating to the manoeuvring capacity of the motor vehicle (1) is used, which describes a safety distance from objects in the surroundings of the motor vehicle (1), and/or **in that** information relating to the detection capability of the sensor device (2, 18, 19) is used, which describes a safety distance from objects in the surroundings of the motor vehicle (1) and/or sensor technology used by the sensor device (2, 18, 19) and/or the spatial arrangement or the position on the motor vehicle side of at least one sensor (3, 4) of the sensor device (2, 18, 19).

2. Method according to claim 1,
**characterised in that**
information relating to the manoeuvring capacity of the motor vehicle (1) is used, which describes the performance of a steering device (9) and/or a braking device (10) and/or a drive device (11) of the motor vehicle (1), and/or **in that** information relating to the detection capability of the sensor device (2, 18, 19) is used, which describes latency times when evaluating sensor data of at least one sensor (3, 4) of the sensor device (2, 18, 19).

3. Method according to claim 1 or 2,
**characterised in that**
at least one piece of information is transmitted from the motor vehicle (1) to the calculation device (7).

4. Method according to any one of the preceding claims,
**characterised in that**
the calculation device (7) determines at least one piece of information and/or retrieves it from a memory (23) in the calculation device.

5. Method according to any one of the preceding claims,
**characterised in that**
a sensor device (18, 19) outside of the motor vehicle and/or a sensor device (2) installed in the motor vehicle (1) is used.

6. Method according to claim 5,
**characterised in that**
the motor vehicle (1) automatically stops in its surroundings in the event of an impending collision with an object (25) determined on the basis of sensor data from the sensor device (2) built into it, or else evades the object (25).

7. Method according to any one of the preceding claims,
**characterised in that**
the movement information comprises a trajectory (24) and/or a stop signal and/or an enable signal for at least one section of the route.

8. Method according to any one of the preceding claims,
**characterised in that**
it is carried out to control the motor vehicle (1) within the system (12) for parking vehicles.

9. Motor vehicle which can be operated at least partially autonomously and is controllable according to a method according to any one of the preceding claims.

## Revendications

1. Procédé de commande d'un véhicule automobile (1) fonctionnant au moins de manière partiellement autonome,
dans lequel le véhicule automobile (1) et/ou son environnement sont détectés par au moins un dispositif capteur (2, 18, 19) et des informations de déplacement commandant le déplacement du véhicule automobile (1) sont déterminées par un ordinateur (7) extérieur au véhicule automobile et sont transmises au véhicule automobile (1),
dans lequel les informations de déplacement sont déterminées en fonction d'au moins une information concernant les capacités de manœuvre du véhicule automobile (1) et/ou les capacités de détection du dispositif capteur (2, 18, 19),
**caractérisé**
**en ce qu'**on utilise une information qui concerne les capacités de manœuvre du véhicule automobile (1) et qui décrit une distance de sécurité à des objets dans l'environnement du véhicule automobile (1), et/ou
**en ce qu'**on utilise une information qui concerne les capacités de détection du dispositif capteur (2, 18, 19) et qui décrit une distance de sécurité à des objets dans l'environnement du véhicule automobile (1) et/ou une technologie de capteur exploitée par le dispositif capteur (2, 18, 19) et/ou la disposition spatiale ou la position, côté véhicule automobile, d'au moins un capteur (3, 4) du dispositif capteur (2, 18, 19).

2. Procédé selon la revendication 1, **caractérisé**
**en ce qu'**on utilise une information qui concerne les capacités de manœuvre du véhicule automobile (1) et qui décrit les performances d'un dispositif de direction (9) et/ou d'un dispositif de freinage (10) et/ou d'un dispositif de propulsion (11) du véhicule automobile (1), et/ou
**en ce qu'**on utilise une information qui concerne les capacités de détection du dispositif capteur (2, 18, 19) et qui décrit des temps de latence lors de l'évaluation de données de capteur d'au moins un capteur (3, 4) du dispositif capteur (2, 18, 19).

3. Procédé selon la revendication 1 ou 2, **caractérisé en ce qu'**au moins une information est transmise par le véhicule automobile (1) à l'ordinateur (7).

4. Procédé selon l'une quelconque des revendications précédentes, **caractérisé en ce que** l'ordinateur (7) détermine au moins une information et/ou la demande à une mémoire (23) côté ordinateur.

5. Procédé selon l'une quelconque des revendications précédentes, **caractérisé en ce qu'**on utilise un dispositif capteur (18, 19) extérieur au véhicule automobile et/ou un dispositif capteur (2) intégré dans le véhicule automobile (1).

6. Procédé selon la revendication 5, **caractérisé en ce que** le véhicule automobile (1), lors d'une menace de collision avec un objet (25) dans son environnement, menace déterminée sur la base de données de capteur du dispositif capteur (2) intégré dans ledit véhicule automobile, évite l'objet (25) ou s'arrête automatiquement.

7. Procédé selon l'une quelconque des revendications précédentes, **caractérisé en ce que** les informations de déplacement comprennent une trajectoire (24) et/ou un signal d'arrêt et/ou un signal d'autorisation pour au moins un tronçon de route.

8. Procédé selon l'une quelconque des revendications précédentes, **caractérisé en ce qu'**il est mis en œuvre pour commander le véhicule automobile (1) à l'intérieur d'une installation (12) destinée au stationnement de véhicules.

9. Véhicule automobile, qui peut fonctionner au moins de manière partiellement autonome et qui peut être commandé selon un procédé selon l'une quelconque des revendications précédentes.
